# EUROPEAN PATENT APPLICATION

(11) **EP 4 108 600 A1**
(43) Date of publication of application: **28.12.2022**
(21) Application number: 21382564.9
(22) Date of filing: 25.06.2021
(51) Int. Cl.: B65G 19/24, B65B 7/16, B65B 57/00, F16P 1/00

(54) **PACKAGING MACHINE WITH PUSH BAR CONVEYOR**

(71) Applicant: MULTIVAC Sepp Haggenmüller SE & Co. KG, 87787 Wolfertschwenden (DE)
(72) Inventor: SILVA, Arturo, 08019 Barcelona (ES); ARDANUY, Albert, 08015 Barcelona (ES); BLASI, Albert, 08201 Sabadell (ES)
(74) Representative: Grünecker Patent- und Rechtsanwälte PartG mbB

(57) **Abstract**

The present invention provides a packaging machine (1), comprising a loading station (2) where a product container (3) is filled with a product (P), wherein the loading station (2) comprises a push bar conveyor (4) for transporting the product container (3) along a conveying direction (R), wherein the push bar conveyor (4) comprises at least one pack support plate (8) for supporting a bottom of the product container (3) in a conveying plane (E), a drive chain (9), a push bar (10) and a coupling device (11) for mounting the push bar (10) at the drive chain (9), wherein the coupling device (11) comprises a resilient clip (12) for holding an end (13) of the push bar (10).

## Description

The present invention refers to a packaging machine according to claim 1.

EP 3 789 321 A1 discloses a packaging machine that is configured as a tray sealer. This tray sealer comprises a push bar conveyor that is configured for transporting product containers from a loading station, where an operator manually fills products into the product containers, towards a downstream positioned sealing station of the tray sealer.

The push bar conveyor as disclosed in EP 3 789 321 A1 comprises lateral drive chains. In between these lateral drive chains, several push bars are mounted transversely with respect to a conveying direction of the push bar conveyor. The push bars are used to push the filled product containers towards the sealing station, where these containers become closed with a lid foil. The push bars are fixed at their opposite ends with a coupling element at the lateral drive chains. The coupling element is provided as a hollow body that can be pushed onto the ends of the push bar.

For coupling the push bar, its ends are positioned in between two mounting pins that protrude inwards from the lateral drive chains. Once both ends of the push bar are positioned in between said mounting pins of the lateral drive chains, at both sides of the push bar the thereat mounted coupling elements are shifted outwards onto the mounting pins of the drive chains. Thereby, the coupling elements are fixed to the mounting pins with frictional forces, such that the push bar has a stable mounting in all directions.

However, the above-described mounting of the push bars can be critical with respect to safety requirements at the loading station. Specifically, at the above-described push bar conveyor, a thereat mounted push bar as described above stays secured at the drive chains, even if forces, e.g. effected by an entrapped product container or by an operator's hand, act on the push bar.

It is the object of the present invention to provide a packaging machine with a push bar conveyor, which has an improved operability regarding safety requirements.

This object can be solved by a packaging machine according to claim 1.

Improved embodiments of the present invention are provided by the subject matter of each of the dependent claims.

The present invention refers to a packaging machine, preferably a packaging machine that is configured as a tray sealer. The inventive packaging machine comprises a loading station where a product container, e.g. a plastic tray or a cardboard tray, is filled with a product. Usually, at the loading station, an operator fills the product container with a product, such as a foodstuff product, like a piece of meat or cheese. The loading station comprises a push bar conveyor for transporting the product container along a conveying direction.

The push bar conveyor comprises at least one pack support plate for supporting a bottom of the product container in a conveying plane, a drive chain, a push bar and a coupling device for mounting the push bar at the drive chain.

According to the present invention, the coupling device comprises a resilient clip for receiving an end of the push bar. Such resilient clip enables that the end of the push bar can be mounted easily by a clipping action and that the end of the push bar is released from the clip when the push bar receives a force against the clipping action. Thus, the resilient clip allows the push bar to jump off the clip when an operator's hand, fingers or some kind of object, e.g. a product container, is entrapped between the pack support plate and the push bar while acting with a jamming force onto the push bar that is beyond the clipping action.

Specifically, the inventive resilient clip is deformable in such a manner that the thereby clipped end of the push bar can be released in a direction that corresponds to a direction of the jamming force that results from the above mentioned entrapment between the pack support plate and the push bar. In other terms, the inventive resilient clip provides an automatic releasing function which enables the push bar to jump off the coupling device in an emergency.

Therefore, if an operator at the loading station carelessly puts a hand into an area between the pack support plate and the push bar, as a safety measure the push bar jumps reliably off the resilient clip when colliding with the hand of the operator in order to avoid injury. In addition, the push bar may jump off if a product container jams in between the pack support plate and the push bar, which can prevent the loaded product from being spilled from the product container into an interior of the push bar conveyor. Therefore, machine-cleaning cycles can be reduced, too.

The inventive coupling device allows an easy and quick mounting of the push bar without using tools. The push bar may be mounted at the resilient clip of the coupling device by conducting a clipping action. Particularly, if the coupling device is already mounted at the drive chain, the end of the push bar can be pushed from above into to resilient clip. Alternatively, it is possible that the push bar is mounted to the coupling device by shifting the clip onto the end of the push bar, i.e. in a longitudinal direction of the push bar without thereby conducting a clipping action.

Preferably, both ends of the push bar are secured to a coupling device as above and/or in the following. Thus, each end of the push bar may be clipped into a resilient clip for mounting the push bar in between lateral drive chains of the push bar conveyor. Ideally, both coupling devices that are used for holding the opposite ends of the push bar are identical. Thus, at both sides the same releasing function can be guaranteed. Hereto, both coupling devices that are holding the ends of the push bar act as grippers that may apply parallel holding forces onto the push bar.

In the following, the inventive coupling device is described with respect to one end of the push bar, wherein the technical features of such a coupling device can be identically provided by the other coupling device that is used for holding and mounting the other end of the same push bar at the opposite lateral drive chain.

Preferably, the resilient clip holds the end of the push bar with a holding force that is less in an upward direction than in a downward direction, when the push bar is moved along the conveying direction. Thereby, the push bar can jump off the resilient clip in a reliable manner when a jamming force acts from below onto the push bar, wherein the push bar can carry forces from above, such as transport forces that are effected for holding an edge of a product container.

It is conceivable, that the clip provides a holding force that is approximately 1.1 to 1.3 times higher than a force of gravity effected by the weight of the push bar. This enables a secure mounting of the push bar when it is moved underneath the transportation plane in an opposite direction with respect to the conveying direction.

According to an improved embodiment, the resilient clip is made of a synthetic material. Such clip can be produced as a low cost component. Preferably, the entire coupling device is made of a synthetic material. Such coupling device is inexpensive and provides improved haptic properties, such that the operator may conveniently mount it at the end of the push bar, as well as at the lateral drive chains of the push bar conveyor. This results in a more secure mounting of the push bar in a correct manner. Preferably, the coupling device is made of Polyoxymethylene (POM).

Ideally, the resilient clip is configured for applying the holding force at the end of the push bar effected by an inherent resistance to deformation of the synthetic material. Hereto, no separate mounting components are necessary for connecting the clip at the end of the push bar.

Preferably, the resilient clip is U-shaped. Therefore, the clip provides one open side that allows the end of the push bar to jump off from the clip when a jamming force being produced by a product container or an entrapped hand of the operator is acting on the push bar at least somehow in the direction towards the open side of the clip. A U-shaped clip is easy to manufacture and can be handled ergonomically by the operator for mounting the push bar at the coupling device and vice versa in a correct manner.

An improved embodiment provides that the coupling device comprises a cavity for holding the end of the push bar in the conveying direction. The cavity can be shaped according to a contour of an outmost section of the end of the push bar. The cavity may be formed next to the resilient clip and may be formed with a rigid shape.

The cavity may have a bottom as vertical support for the end of the push bar. The bottom provides a rigid support on which the end of the push bar can be positioned in a stable manner. Thus, the bottom of the cavity can absorb forces that act from above onto the push bar.

The cavity may receive the outmost section of the end of the push bar in such a manner that it provides rigidity against forces in the conveying direction but gives little or no resistance to forces that result from an entrapment between the push bar and the pack support plate, i.e. forces with at least some vertically acting force component directed away from the pack support plate.

The cavity may be a rigid form fitting next to the resilient clip. The cavity and the clip are very simple technical means that may synergetically act as co-operating members that allow the push bar to jump off from the coupling device when an entrapment occurs, wherein the cavity additionally gives the push bar a rigid support for precisely positioning and holding the push bar against forces in and opposite to the conveying direction.

By using the cavity for holding the push bar in the conveying direction, the resilient clip can be formed very flexible for allowing the push bar to easily jump off for safety reasons. Also, thanks to the cavity, the resilient clip can be formed in such a shape that no or at least minimal forces are applied in the conveying direction thereto. In other terms, the cavity unburdens the resilient clip with respect to forces that act in the conveying direction. Thereby, the resilient clip's life span can be increased.

Specifically, the cavity is formed with opposing rigid side walls that are distanced from each other with respect to a width of the outmost section of the end of the push bar. Thus, the outmost section may be received in between these opposing side walls by a form fit.

According to an improved embodiment, the rigid side walls provide inwards facing surfaces towards the outmost section of the end of the push bar. During operation, these surfaces might contact the outmost section of the end of the push bar such that in the conveying direction the push bar is mounted in a predetermined position at the coupling device.

It is conceivable that the cavity comprises a mouth for receiving the end of the push bar, wherein the mouth is facing away from the pack support plate when the push bar is moved in the conveying direction. Thereby, the mouth allows the end of the push bar to jump off the cavity when a force comes from below, e.g. a jamming force that results from a product container or a hand entrapped in between the pack support plate and the push bar.

Preferably, the resilient clip comprises a first resilient leg and/or a second resilient leg. These legs can be used for applying the gripping action onto the end of the push bar and enables the same to easily jump off in reaction to a jamming force acting on the push bar, especially when it comes from below.

An improved embodiment foresees that the first resilient leg and/or the second resilient leg comprises a thickened end portion. Said thickened end portion prevents the push bar from jumping off the coupling device in response to a normal movement of the lateral drive chains. It may occur that during operation of the packaging machine, the drive chains might smoothly vibrate, such that the said thickened end portions enable securing the push bar at the coupling device, even if such vibrations occur. Consequently, with respect to normal operating conditions of the packaging machine, i.e. without jamming or entrapped objects, the coupling device safely holds the push bar.

The thickened end portions can have a form such that forces on the push bar from below resulting from jamming between the pack support plate and the push bar result in that the clip legs spreading in a predetermined manner. Thanks to such spreading action, the push bar can be kicked off when it is released to a point that allows the spread legs contracting towards one another. Thereby, the operator can better recognize that the push bar is no longer securely held at the coupling device.

Preferably, the resilient clip comprises at least one notch. Such notch can be foreseen in a region of the clip between one of its legs and a bottom of the clip. The notch can be formed in order to reach a predetermined holding force that can be performed by the clip. Ideally, between each of the resilient legs and the bottom of the clip a notch is formed.lt is conceivable that the coupling device comprises at least one connector pin for mounting the coupling device at the drive chain. The drive chain may comprise a corresponding hollow pin with a receiving hole for accommodating therein the connector pin. Therefore, the coupling device may act as a plug and the drive chain may act as a corresponding socket.

Preferably, at one side of the coupling device, the coupling device provides two parallel connector pins. This gives the coupling device at least at this side the appearance of a plug connector. Using both connector pins, the coupling device can be secured with a predetermined orientation at the drive chain of the push bar conveyor. In addition, by these two connector pins being coupled at the drive chain, it can be ensured that the resilient clip is held in a predetermined orientation.

The resilient clip and the connector pins may be formed at opposite sides of the coupling device, such that an operator, at a first instance, recognizes how the coupling device can be used for mounting the push bar thereat, as well as how the coupling device can be mounted at the drive chain in a correct manner.

For easy mounting, it is conceivable that the connector pin comprises a deformable head. It is possible that such head comprises at least two hooks that can function as an anchor for mounting the coupling device at the drive chain.

Preferably, the coupling device comprises a central solid body, i.e. the coupling device is not formed as a hollow body. The operator can hold the coupling device at the central solid body for mounting the coupling device at the drive chain and/or at the end of push bar. Preferably, the aforementioned cavity is formed between the central solid body and the resilient clip.

A preferred solution provides that the coupling device is an injection molded component, e.g. a POM injection molded component. Thereby, the complete coupling device, including the clip and the connector pins, is produced as an integral low cost part that allows mounting the push bar at the drive chain without any other components, such as screws or washers. As a result, a mounting process for the push bar can be done very quickly and easily. In addition, the coupling device can be mounted without using tools at the push bar and the drive chain, which prevents the operator from using tools incorrectly. This prevents tools from lying around the push bar conveyor area, especially on the pack support plate, which could be a safety risk during operation of the packaging machine.

According to a preferred embodiment, the packaging machine comprises a sensor unit for detecting a mounting state of the push bar. The sensor unit may be configured as a visual system, e.g. as a camera that surveilles the operation at the loading station, especially the operation of the push bar conveyor. The camera may detect a mounting state of the end of the push bar along its pathway in the conveying direction. Such sensor unit can be mounted at a sealing station that is provided downstream of the push bar conveyor.

Preferably, the packaging machine comprises a control unit that is connected with the sensor unit. The control unit may be configured to continuously receive signals from the sensor unit, wherein in an event of emergency, e.g. by detecting an entrapped hand or a jammed product container, the control unit stops an operation of the entire packaging machine. Such an emergency stop, could trigger the control unit to display instructions to the operator on how the packaging machine must be checked and/or get refitted such that a controlled and safe re-start of the packaging machine is possible.

Improved embodiments of the present invention are shown by the following drawings:
- Fig. 1: a packaging machine according to the present invention,
- Fig. 2: an enlarged view of a loading station comprising a push bar conveyor,
- Fig. 3: an isolated view of a coupling device for mounting a push bar at the push bar conveyor shown by Fig. 2,
- Fig. 4: a front profile of the coupling device shown by Fig. 3,
- Fig. 5: a push bar with coupling devices mounted at both of its ends,
- Fig. 6: a push bar coupled by means of a coupling device at a drive chain, and
- Fig. 7: an enlarged view of a coupling device being mounted at an end of the push bar.

Identical features are provided with the same reference numerals throughout the figures.

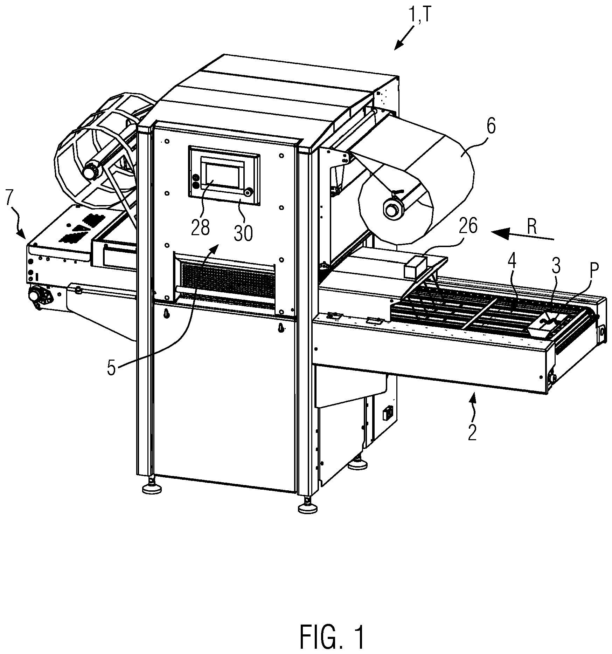

Fig. 1 shows a packaging machine 1, which is configured as a tray sealer T. The packaging machine 1 comprising a loading station 2 where a product container 3 can be filled with a product P. The product P can be a foodstuff product. Usually, an operator who is standing at a lateral side of the loading station 2 manually fills the product P into the container 3. Thus, there is an increased requirement for safety. Specifically, it is important that the operator can be prevented from getting injured, when the operator carelessly takes a hand into an operating area of a push bar conveyor 4.

The push bar conveyor 4 is configured for transporting the product containers 3 along a conveying direction R. Downstream of the loading station 2, the packaging machine 1 comprises a sealing station 5. The sealing station 5 receives the filled product containers 3 from the push bar conveyor 4 and seals the therein received, filled product containers 3 with an upper lid foil 6 that is directed through the sealing station 5. At the entrance of the sealing station 5 a sensor unit 26 is provided for surveilling the loading station 2, especially the operation of the push bar conveyor 4. The sealing station 5 is equipped with a control unit 30 with a display 28 for controlling and displaying processes of the packaging machine 1.

In the conveying direction R, behind the sealing station 5, a discharging unit 7 is provided from where the sealed product containers 3 are moved away from the packaging machine 1.

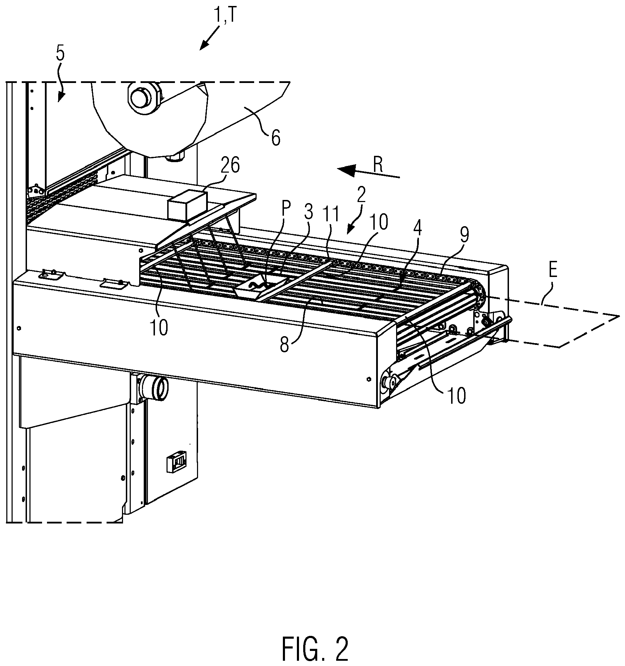

Fig. 2 shows an enlarged version of the loading station 2. The push bar conveyor 4 comprises a pack support plate 8 for supporting a bottom of the product container 3 in a conveying plane E. The conveying plane E is formed as a horizontal plane along which the product containers 3 are moved along the loading station 2 in the conveying direction R.

The push bar conveyor 4 further comprises a drive chain 9, a push bar 10 and a coupling device 11 for mounting the push bar 10 at the drive chain 9. Another drive chain, which is not shown in Fig. 2, runs at the other lateral side of the push bar conveyor 4, i.e. opposite to the illustrated drive chain 9. Although Fig. 2 only shows the coupling device 11 for mounting the push bar 10 at the drive chain 9, at the opposite lateral side, another coupling device is used for holding the same push bar 10 against the thereat installed drive chain. Thus, for mounting one push bar 10 two coupling devices 11 are used.

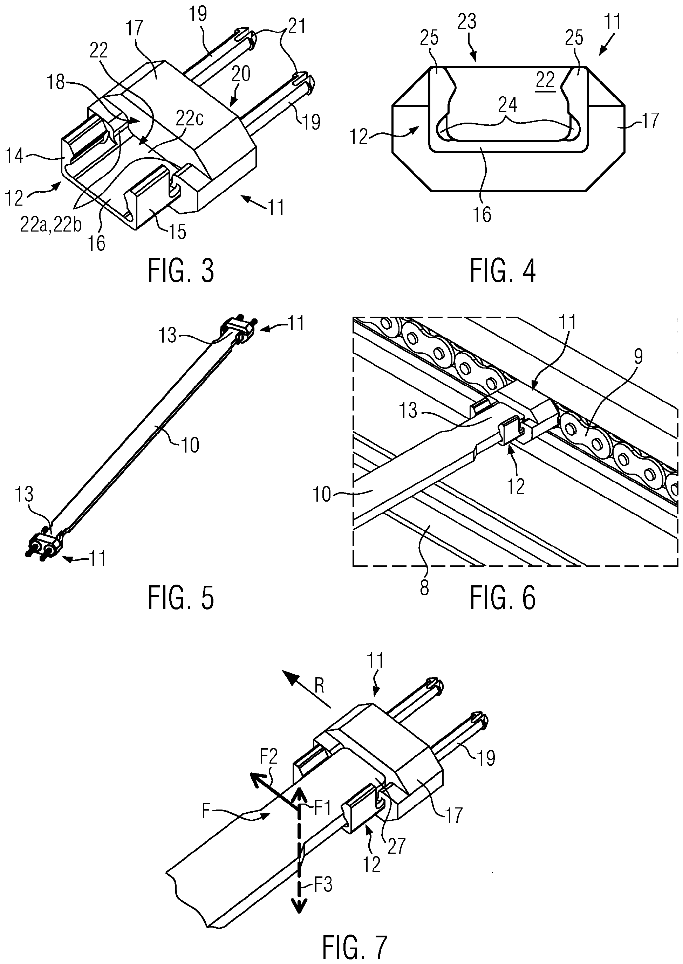

Fig. 3 shows the coupling device 11 in an isolated manner. The coupling device 11 is provided as a safety component that allows the push bar 10 to be released from its mounting state when a jamming force is applied onto the push bar 10, especially a jamming force that acts from a region in between the pack support plate 8 and the push bar 10 onto the same.

Fig. 3 further shows that the coupling device 11 comprises a resilient clip 12 that is formed for holding an end 13 (see Fig. 5) of the push bar 10 in a detachable manner. The resilient clip 12 comprises a first resilient leg 14 and a second resilient leg 15. The first resilient leg 14 and the second resilient leg 15 protrude from a bottom 16 of the clip 12. In action, the first and the second resilient legs 14, 15 are used for clipping in between the end 13 of the push bar 10 for holding the push bar 10 transversely to the conveying direction R. The bottom 16 thereby acts as a vertical support for the end 13 of the push bar 10.

In addition, Fig. 3 shows that the coupling device 11 comprises a central solid body 17 and a cavity 22 which is formed between the resilient clip 12 and the central body 17. The central solid body 17 has an octagonal shape for easy handling. The central solid body 17 provides a first lateral side 18 where the cavity 22 is formed. The cavity 22 comprises opposing side walls 22a, 22b that provide a form fit for accurately accommodating there between the end 13 of the push bar 10, especially an outmost section 27 (see Fig. 7) thereof. Also, the cavity 22 comprises a bottom 22c which acts as a vertical support for the end 13 of the push bar 10. As illustrated in Fig. 3, the bottom 16 of the clip 12 and the bottom 22c of the cavity 22 together form a flush support surface for the end 13 of the push bar 10.

Further, Fig. 3 shows connector pins 19 that are provided at a second lateral side 20 of the central solid body 17, wherein the second lateral side 20 is opposite to the first lateral side 18. Each of the connector pins 19 comprises a deformable head 21. Via the connector pins 19, the coupling device 11 can be mounted at the drive chain 9 in thereat provided receiving holes. The drive chain 9 is therefore provided as a pin-hole drive chain, wherein the drive chain 9 comprises pins that may connect sections of the chain and which provide the receiving holes for accommodating the connector pins 19.

Fig. 4 shows a front view of the coupling device 11. The cavity 22 provides an upwards opened mouth 23. The mouth 23 is facing upwards away from the pack support plate 8 when the coupling device 11 is mounted at the drive chain 9 moving in the conveying direction R.

Further Fig. 4 shows that the resilient clip 12 comprises lateral notches 24 that are formed between the bottom 16 and each of the first and second resilient legs 14, 15. These notches 24 enable the first and the second legs 14, 15 to be easily forced apart from each other when a jamming force is applied onto the push bar 10 which comes from an entrapped hand or product container 3.

Also, Fig. 4 shows that the first resilient leg 14 comprises a thickened end portion 25. Such a thickened end portion is also provided on the second resilient leg 15.

The coupling device 11, as illustrated by Figs. 3 and 4, is provided as an integral injection-molded component. The coupling device 11 looks like a plug, such that a familiar handling thereof can be guaranteed for mounting same at the end 13 of the push bar 10, as well as the drive chain 9.

Fig. 5 shows the push bar 10 in an isolated manner with coupling devices 11 being mounted at its both ends 13. Each of the coupling devices 11 can be pushed onto the end 13 of the push bar 10 or the end 13 of the push bar 10 can be clipped into the resilient clips 12, alternatively, for mounting the push bar 10 at the coupling devices 11.

Fig. 6 shows an enlarged view of a mounting state of the push bar 10 at the drive chain 9 via the coupling device 11. Fig. 6 shows that the end 13 of the push bar 10 has a reduce size in comparison to a rather inward section of the push bar 10. Thereby, the clip 12 can be produced with a reduced size, too. Such a reduced end section can be made a standard profile for different push bars 10 for transporting different kinds of product containers 3.

Fig. 7 shows the push bar 10 with its end 13 mounted at the resilient clip 12 and into the cavity 22 of the coupling device 11 in an isolated manner. Specifically, the outmost section 27 of the end 13 of the push bar 10 is accommodated within the cavity 22 by form fit. Next to the outmost section 27, the end 13 of the push bar 10 is received in the clip 12. Here, it is not necessary to establish a form fit by the clip 12. Rather, the clip 12 may receive the end 13 of the push bar 10 with a very little contact area, e.g. solely in the region of the thickened portions 25.

Fig. 7 shows several forces in a schematic manner that may act during operation of the push bar conveyor 4. Specifically, Fig. 7 shows in a schematic matter force components of a holding force F for holding the end 13 of the push bar 10 by means of the resilient clip 12 and the cavity 22.

In detail, Fig. 7 shows that the holding force F may act with a vertical force component F1 being directed upwards provided by the resilient clip 12. Such vertical force component F1 allows the push bar 10 to easily jump off the coupling device 11. Also, Fig. 7 shows a transporting force component F2 being directed in the conveying direction R provided by the cavity 22, as well as a support force component F3 that is directed vertically downwards, i.e. opposite to the force component F1, primarily acting onto the bottom 22c of the cavity 22.

In a schematic manner, Fig. 7 shows that force component F1 is smaller compared to force component F2, while force component F2 is smaller compared to force component F3, respectively. Therefore, with such a holding force F, the resilient clip 12 opens easier in reaction to a jamming force, i.e. a force that may exist when an operator's hand is jammed between the pack support pate 8 and the push bar 10, than in reaction to other forces that may act in or contrary to the conveying direction R or from above. Consequently, the push bar 10 may jump off the resilient clip 12 without a great resistance, such that a hand form the operator which collides the push bar 10 in an area between the pack support plate 8 and the push bar 10 can be prevented from getting injured.

Fig. 7 further shows that the transport force component F2, which is bigger than the clipping force component F1, ensures secure transport of the product conveyor 3 in the conveying direction R. Specifically, the force component F3 enables a product container 3 with a heavy product P to dock at the push bar 10 and be pushed securely along the conveying direction R. Due to the rigid shape of the cavity 22, it may provide a big rigidity to big force components F3.

The coupling device 11 shown by Figs. 3 to 7 is configured as a safety component, such that the push bar 10 may jump off when a finger, hand or some kind of object such as the product container 3 becomes blocked in between the pack support plate 9 and the push bar 10. Due to the shape of the clip 12, the push bar 10 may be easily and quickly mounted thereat without using additional tools.

In addition, the coupling device 11 enables improved machine safety, as a push bar 10 that collides with a die-set of the sealing station 5 may not really counteract as it jumps off from its mounting. Further, the drive chains 9 remain unaffected when the push bar 10 jumps off in reaction to a jamming force, such that the drive chains 9 can be prevented from being stressed.

While the cavity 22 provides a rigid fitting against forces acting in the conveying direction R, the resilient clip 12 gives little resistance to forces thereon resulting from a collision in an area between the transportation plane E and a plane in that the push bar 10 is moving in the conveying direction R, e.g. by a therein jammed product container 3 or an entrapped operator's hand.

## Claims

1. Packaging machine (1), comprising a loading station (2) where a product container (3) is filled with a product (P), wherein the loading station (2) comprises a push bar conveyor (4) for transporting the product container (3) along a conveying direction (R), wherein the push bar conveyor (4) comprises at least one pack support plate (8) for supporting a bottom of the product container (3) in a conveying plane (E), a drive chain (9), a push bar (10) and a coupling device (11) for mounting the push bar (10) at the drive chain (9), **characterized in that** the coupling device (11) comprises a resilient clip (12) for receiving an end of the push bar (10).

2. Packaging machine according to claim 1, **characterized in that** the resilient clip (12) holds the end (13) of the push bar (10) with a holding force (F) that is less in an upward direction than in a downward direction.

3. Packaging machine according to one of the previous claims, **characterized in that** the resilient clip (12) is made of a synthetic material.

4. Packaging machine according to claim 3, **characterized in that** the resilient clip (12) is configured for applying the holding force (F) at the end (13) of the push bar (10) effected by an inherent resistance to deformation of the synthetic material.

5. Packaging machine according to one of the previous claims, **characterized in that** the resilient clip (12) is U-shaped.

6. Packaging machine according to claim 5, **characterized in that** the coupling device (11) comprises a cavity (22) for holding the end (13) of the push bar (10) in the conveying direction (R).

7. Packaging machine according to claim 6, **characterized in that** the cavity (22) comprises a mouth (23) for receiving the end (13) of the push bar (10), wherein the mouth (23) is facing away from the pack support plate (8) when the push bar (10) is moved in the conveying direction (R).

8. Packaging machine according to one of the previous claims, **characterized in that** the resilient clip (12) comprises a first resilient leg (14) and/or a second resilient leg (15).

9. Packaging machine according to claim 8, **characterized in that** the first resilient leg (14) and/or the second resilient leg (15) comprises a thickened end portion (25).

10. Packaging machine according to one of the previous claims, **characterized in that** the resilient clip (12) comprises at least one notch (24).

11. Packaging machine according to one of the previous claims, **characterized in that** the coupling device (11) comprises at least one connector pin (19) for connecting the coupling device (11) at the drive chain (9).

12. Packaging machine according to claim 11, **characterized in that** the connector pin (19) comprises a deformable head (21).

13. Packaging machine according to one of the previous claims, **characterized in that** the coupling device (11) comprises a central solid body (17).

14. Packaging machine according to one of the previous claims, **characterized in that** the coupling device (11) is an injection-molded component.

15. Packaging machine according to one of the previous claims, **characterized in that** the packaging machine (1) comprises a sensor unit (26) for detecting a mounting condition of the push bar (10).
